# EUROPÄISCHE PATENTSCHRIFT

(11) **EP 3 110 686 B1**
(45) Veröffentlichungstag und Bekanntmachung des Hinweises auf die Patenterteilung: **13.11.2019**
(21) Anmeldenummer: 14708226.7
(22) Anmeldetag: 26.02.2014
(51) Int. Cl.: G05B 19/042

(54) **STEUERUNGSSYSTEM UND STEUERUNGSVERFAHREN FÜR EIN ELEKTROFAHRRAD**
CONTROL SYSTEM AND METHOD FOR AN E-BIKE
SYSTÈME ET PROCÉDÉ DE COMMANDE POUR VÉLO À ASSISTANCE ÉLECTRIQUE

(43) Veröffentlichungstag der Anmeldung: 04.01.2017
(60) Teilanmeldung: 19171515.0
(73) Patentinhaber: Robert Bosch GmbH, 70442 Stuttgart (DE)
(72) Erfinder: GAHLERT, Andreas, 61462 Königstein (DE)
(86) Internationale Anmeldenummer: PCT/EP2014/053729
(87) Internationale Veröffentlichungsnummer: WO 2015/127967

(56) Entgegenhaltungen:
- EP-A1- 2 565 110
- DE-A1-102012 211 719
- US-A1- 2009 181 826
- US-A1- 2011 133 542
- "Nyon Performance: The first all-in-one ebike cycle computer by Bosch", , 4. Oktober 2013 (2013-10-04), XP055147870, Gefunden im Internet: URL:https://web.archive.org/web/2013100316 0545/http://www.bosch-ebike.de/en/produkte _neu/nyon/nyon__portal_und_apps.php [gefunden am 2014-10-21]

## Beschreibung

Die Erfindung betrifft ein Steuerungssystem für ein Fahrzeug mit den Merkmalen des Oberbegriffs des Anspruchs 1 sowie ein Verfahren zum Steuern eines Fahrzeuges mit einem derartigen Steuerungssystem.

Steuerungssysteme in Fahrzeugen werden mehr und mehr durch computergestützte Lösungen übernommen. Dabei werden vom Steuerungssystem vielfältige Informationen über Sensoren erfasst und ausgewertet und daraus entsprechende Steuersignale für elektronische Komponenten automatisch erzeugt. Darüber hinaus weisen derartige Steuerungssysteme üblicherweise eine Schnittstelle zum Benutzer auf, sodass dieser über Zustandsinformationen informiert wird und gegebenenfalls in die Steuerung eingreifen kann. Neben den für den Betrieb des Fahrzeuges wesentlichen Zustandsinformationen und Steuersignalen umfassen die Steuerungssysteme von Fahrzeugen in der Regel weitere Funktionalitäten, beispielsweise ein satellitengestütztes Navigationssystem oder einen Internetzugang.

Derartige Steuerungssysteme für Fahrzeuge dienen dabei sowohl als Bedieneinheit und Anzeigeinstrument als auch als zentraler Controller.

Bei hochpreisigen Fahrzeugen, wie beispielsweise höherwertigen Kraftfahrzeugen oder größeren Booten ist der Aufwand für die Implementation eines derartigen Steuerungssystems mit den damit verbundenen Kosten im Verhältnis zu den Gesamtkosten nicht wesentlich.

Allerdings besteht auch für günstigere Fahrzeuge, wie beispielsweise ein Fahrrad, ein Elektrofahrrad, ein Quad oder ein kleineres Motorboot, ebenfalls der Wunsch nach einem zentralen, vernetzten Steuerungssystem, in dem alle Informationen zusammenlaufen und dass anhand dieser Informationen Steuersignale aussenden kann und gleichzeitig eine Bedienerschnittstelle zur Verfügung stellt.

Von der Bosch GmbH wird in Zusammenarbeit mit einigen Herstellern von Elektrofahrrädern unter dem Markennamen "Nyon" ein Steuerungssystem angeboten, das fest mit dem jeweiligen Elektrofahrrad verbunden wird und neben der Antriebssteuerung auch weitere Funktionalitäten, wie eine satellitengestützte Navigation, eine Anbindung von Smartphones oder beispielsweise die Kopplung mit Herzfrequenzbrustgurten zur Anzeige der aktuellen Herzfrequenz bietet. Dieses herstellergebundene Steuerungssystem ist jedoch aufgrund der weitgehenden Integration in das jeweilige Elektrofahrrad wenig flexibel und erhöht den Herstellungsaufwand und damit die Kosten für das Elektrofahrrad deutlich.

Der Erfindung liegt nun die Aufgabe zugrunde, ein Steuerungssystem für ein Fahrzeug und ein Verfahren zur Steuerung eines Fahrzeuges anzugeben, das mit relativ geringem Aufwand und damit geringen Kosten bei unterschiedlichen Fahrzeugen eingesetzt werden kann. Insbesondere soll eine Mehrfachnutzung des Steuerungssystems bei verschiedenen Fahrzeugen möglich sein.

Aus der DE 10 2012 211 719 A1 ist eine mechanische Halterung für ein Smartphone an einem Fahrrad bekannt. Um die Halterung an verschiedene Smartphones anzupassen, können verschiedene Adapter 04 eingesetzt werden. Das Smartphone dient dabei selbst als Steuereinheit für das Antriebssystem.

Aus der EP 2 565 110 A1 ist eine Vorrichtung zum Austausch von Daten mit einem Stellglieds eines Zweirads bekannt. Dabei kann die Vorrichtung von einer Benutzerschnittstelle drahtlos über eine dynamische Internetanwendung angesteuert werden.

Aus der US 2011/133542 A1 ist ein elektrisch antreibbares Rad bekannt, welches an ein Fahrrad angebaut werden kann. Um das elektrisch antreibbare Rad zu steuern, beispielsweise zu Bremszwecken, kann ein Smartphone eingesetzt werden, welches die Steuerung des Antriebs des Rades über Bluetooth oder eine andere drahtlose Verbindung steuert.

Aus der US 2009/181826 A1 ist ein System bekannt, welches zur Steuerung und Kommunikation bei einem Elektrofahrrad eingesetzt werden kann. Dabei kann in Abhängigkeit von der Herzfrequenz des Fahrers die Antriebsleistung derart gesteuert werden, dass die Anstrengung und somit die Herzfrequenz des Fahrers konstant bleibt.

Bei einem Steuerungssystem für ein Fahrzeug, das ein mobiles Eingabeund Auswertegerät, eine Haltevorrichtung für das Eingabeund Auswertegerät sowie Mittel zum Ansteuern elektronischer Komponenten und zum Erfassen von Zustandsinformationen des Fahrzeuges umfasst, ist erfindungsgemäß vorgesehen, dass eine Auswertung der von den Mitteln erhaltenen Zustandsinformationen sowie die Generierung von Steuersignalen für die elektronischen Komponenten im mobilen Eingabe- und Auswertegerät erfolgt. Die Mittel umfassen dabei beispielsweise Sensoren, Schalter, Treiberbausteine, Kameras, Servomotoren und Ähnliches und ermöglichen zum Beispiel ein Auslesen von Fahrzeug- und/oder Fahrerdaten. Erfindungsgemäß wird dabei die im mobilen Eingabe- und Auswertegerät vorhandene Rechenleistung ausgenutzt und für die Steuerung fest mit dem Fahrzeug verbundener, elektronischer Komponenten verwendet. Das mobile Eingabe- und Auswertegerät dient somit als übergeordnete Steuerung, die mit unterschiedlichen Fahrzeugen eingesetzt werden kann. Insbesondere ist es als Zubehör für viele Fahrzeuge einsetzbar. Es ist also durch die Verwendung des erfindungsgemäßen Steuerungssystems nicht erforderlich, jedes Fahrzeug mit einem eigenen Steuerungssystem auszustatten, vielmehr kann der aufwendigste und damit kostenintensivste Teil, nämlich dass die erforderliche Rechen- und Speicherkapazität sowie eine Benutzerschnittstelle zur Verfügung stellende, mobile Eingabe- und Auswertegeräte mit unterschiedlichen Fahrzeugen verwendet werden. Dies hat darüber hinaus den Vorteil, dass nutzerspezifische Einstellungen durch Mitnahme des mobilen Eingabe- und Ausgabegerätes direkt im jeweils genutzten Fahrzeug verfügbar sind. Dabei ermöglicht die Verwendung des mobilen Eingabe- und Auswertegerätes zur Auswertung der Zustandsinformationen und zur Generierung von Steuersignalen den Einsatz des Steuerungssystems auch in kostengünstigen Fahrzeugen, da der Implementierungsaufwand gering gehalten wird. Insbesondere ist es nicht erforderlich, ein leistungsfähiges Steuergerät fest mit dem jeweiligen Fahrzeug zu verbinden. Deren Aufgabe wird vielmehr vom mobilen Eingabe- und Auswertegerät übernommen. Dabei können alle oder ausgewählte Zustandsinformationen vom mobilen Eingabe- und Auswertegerät angezeigt werden. Das mobile Eingabe- und Auswertegerät dient dabei also als sogenannter Bordcomputer oder Fahrradcomputer, der Informationen über die Ist-Geschwindigkeit des Fahrzeugs, der Fahrzeit, der durchschnittlichen Geschwindigkeit, des Energieverbrauchs, zurückgelegte Höhenmeter und ähnliches anzeigt. Auf zusätzliche Anzeigeelemente kann daher verzichtet werden.

In einer besonders bevorzugten Ausgestaltung ist das Fahrzeug als ein Elektrofahrzeug, insbesondere als ein Elektrofahrrad ausgebildet, das ein elektrisches Antriebssystem umfasst, wobei Zustandsinformationen vom elektrischen Antriebssystem zum mobilen Eingabe- und Auswertegerät und Steuersignale vom mobilen Eingabe- und Auswertegerät an das Antriebssystem übertragbar sind. Insbesondere im Bereich der Elektrofahrzeuge, dabei besonders bei Elektrofahrrädern, ist der Preisdruck aufgrund konventionell angetriebener Fahrzeuge beziehungsweise mit Muskelkraft angetriebener Fahrräder sehr hoch. Darüber hinaus bieten derartige Elektrofahrzeuge gute Einflussmöglichkeiten für den Benutzer, wobei spezielle Zustandsinformationen, wie beispielsweise eine Restreichweite, eine Batteriekapazität oder ein anliegendes beziehungsweise verfügbares Drehmoment für den Nutzer besonders interessant sein können. Diese Zustandsinformationen können dem Nutzer dann über das Eingabe- und Auswertegerät zur Verfügung gestellt werden. Darüber hinaus kann das Eingabe- und Auswertegerät als übergeordnete Steuerung eine gegebenenfalls nutzerspezifische Steuerung des Antriebssystems übernehmen, wobei zumindest teilweise eine automatische Berücksichtigung der vom Fahrzeug stammenden Zustandsinformationen möglich ist. Durch das erfindungsgemäße Steuerungssystem ist es also möglich, ohne großen Aufwand und damit sehr kostengünstig, auch preisgünstige Fahrzeuge, wie Elektrofahrräder, mit einem komfortablen und hochfunktionellen Steuerungssystem auszustatten. Dabei kann eine Energieversorgung durch den Energiespeicher des Elektrofahrzeugs bzw. Elektrofahrades zumindest bedarfsbedingt vorgesehen werden, um so eine Reichweitenbegrenzung aufgrund nicht ausreichender Batteriekapazität des mobilen Eingabe- und Auswertegerätes zu vermeiden.

Bevorzugterweise ist das mobile Eingabe- und Auswertegerät als Smartphone ausgebildet. Smartphones werden als Mobiltelefone von unterschiedlichen Herstellern angeboten, beispielsweise unter dem Markennamen "IPhone" von der Firma Apple oder unter dem Markennamen "Galaxy" von der Firma Samsung. Diese Smartphones weisen als berührungssensitives Display eine Benutzeroberfläche auf, die die Eingabe von Daten durch den Benutzer ermöglicht. Darüber hinaus können auf dem Display die Zustandsinformationen angezeigt werden. Smartphones bieten darüber hinaus eine Vielzahl von Funktionen wie Telefonie, Datenspeicherung wie insbesondere die Wiedergabe und Aufnahme von Bildern, Filmen und Musik, GPS-Navigation, mobile Internetnutzung, drahtlose Verbindungstechniken wie WLAN und Bluetooth und vieles mehr. Dabei sind die Smartphones in der Regel mit leistungsfähigen Prozessoren und ausreichend großen Speicherkapazitäten ausgestattet, sodass diese die zusätzlichen Steuerungsaufgaben eines Steuerungssystems problemlos und ausreichend schnell übernehmen können. Durch die Verwendung eines Smartphones, das ein großer Teil des angesprochenen Nutzerkreises sowieso schon besitzt, können also die zusätzlichen Kosten zum Ausstatten eines Fahrzeuges mit dem erfindungsgemäßen Steuerungssystem sehr gering gehalten werden. Der aufwendigste und damit kostenintensivste Teil des Steuerungssystems, nämlich die Recheneinheit mit dazu erforderlichen Speicherelementen und einer Anzeige und Bedienoberfläche wird dann durch das mobilen Gerät, nämlich dem Smartphone, zur Verfügung gestellt. In diesem Sinne gleichgestellt mit dem Smartphone sind dabei entsprechende elektronische Geräte, die keine Telefonierfunktion aufweisen, wie beispielsweise Tablet-PCs und Ähnliches.

In einer besonders bevorzugten Ausgestaltung ist in der Haltevorrichtung mindestens ein Sende- und Empfangselement angeordnet, mit dem das mobile Eingabe- und Auswertegerät insbesondere drahtlos verbindbar ist. Die Haltevorrichtung dient damit sozusagen als Zentraleinheit mit eigenem Controller, der die Kommunikation zwischen dem mobilen Eingabe- und Auswertegerät und den Mitteln beziehungsweise Komponenten steuert. Durch das Vorsehen einer drahtlosen Verbindung ist das Steuerungssystem dann im Wesentlichen herstellerunabhängig, da im Eingabe- und Auswertegerät keine entsprechenden Steckverbinder zur Verfügung gestellt werden müssen. Insbesondere bei der Verwendung eines Smartphones als mobiles Eingabe- und Auswertegerät sind die für eine drahtlose Kommunikation erforderlichen Funktionen, beispielsweise ein WLAN-Modul oder Bluetooth-Modul, in der Regel ohnehin bereits integriert. Dabei kann die Einbindung des mobilen Eingabe- und Auswertegerätes relativ problemlos erfolgen, da dieses nur mit dem in der Haltevorrichtung angeordneten Sende- und Empfangselement kommunizieren muss und keine eigenständige Verbindung zu den Mitteln beziehungsweise Komponenten des Fahrzeuges aufbaut. Der Implementierungsaufwand wird somit gering gehalten.

Bevorzugterweise weist das Steuerungssystem Mittel zum Erfassen und insbesondere drahtlosem Übertragen biometrischer Daten des Fahrers an das mobile Eingabe- und Auswertegerät auf, das eine Funktion zur Darstellung und Auswertung der biometrischen Daten aufweist, wobei gegebenenfalls auf Grundlage der Auswertung automatisch Steuersignale vom mobilen Eingabe- und Auswertegerät generierbar sind. Nicht nur rein fahrzeugbezogene Zustandsinformationen werden also im Eingabe- und Auswertegerät verarbeitet und gegebenenfalls angezeigt, sondern auch nutzerspezifische Informationen. Beispielsweise kann ein zur Herzfrequenzmessung verwendeter Brustgurt drahtlos mit dem Eingabe- und Auswertegerät verbunden sein, sodass die aktuelle Herzfrequenz angezeigt wird. Wenn nun beispielsweise die so ermittelte Herzfrequenz über einen einstellbaren Grenzwert liegt, kann das mobile Eingabe- und Auswertegerät beispielsweise eine Unterstützung der Fortbewegung bei einem Elektrofahrrad durch entsprechende Ansteuerung des Antriebssystems verstärken, sodass der Nutzer entlastet wird. Aber auch andere Anwendungen, beispielsweise eine Blutdrucküberwachung, eine Müdigkeitserkennung und Ähnliches sind denkbar.

Vorzugsweise ist das Sende- und Empfangselement drahtlos mit den Mitteln verbindbar, wobei das Sende- und Empfangselement zur drahtlosen Kommunikation insbesondere mit standardisierten Verfahren geeignet ist. Das Sende- und Empfangselement, das die Kommunikation zwischen den Mitteln und dem mobilen Eingabe- und Auswertegerät leitet, kann also nicht nur mit dem mobilen Eingabe- und Auswertegerät drahtlos kommunizieren, sondern auch mit den Mitteln des Fahrzeuges. Ein Verdrahtungsaufwand wird damit sehr gering gehalten. Damit ist die Platzierung des Sende- und Empfangselementes am Fahrzeug auch nur geringen Einschränkungen unterworfen, da keine aufwendige Verlegung von Leitungen erforderlich ist. Der Implementationsaufwand des Steuerungssystems wird dementsprechend gering gehalten. Als standardisierte Verfahren kommen insbesondere WLAN, Bluetooth, 3&4, Zigbee und ähnliche Industriestandards zur drahtlosen Übertragung infrage, wobei es insbesondere voreilhaft ist, wenn alle Standards zur drahtlosen Kommunikation unterstützt werden, um eine maximale Kompatibilität und Zukunftssicherheit zu bieten.

Vorzugsweise weist das Steuerungssystem Mittel zur satellitengestützten Positionsbestimmung auf, die insbesondere in der Haltevorrichtung angeordnet sind. Diese Mittel können insbesondere dem Sende- und Empfangselement zugeordnet sein. Die satellitengestützte Positionsbestimmung kann dann beispielsweise in Verbindung mit Kartendaten zur satellitengestützten Navigation verwendet werden.

Besonders bevorzugt ist allerdings, dass in der Haltevorrichtung eine Diebstahlwarneinrichtung angeordnet ist, die insbesondere ein Positionstracking aufweist. Dabei wird die satellitengestützte Positionsbestimmung ausgenutzt und beispielsweise bei einer unbeabsichtigten Änderung der Position über ein in der Haltevorrichtung untergebrachtes GSM-Modul eine entsprechende Nachricht an das mobile Eingabe- und Auswertegerät übersandt, falls dieses nicht mit der Haltevorrichtung gekoppelt ist. Die Diebstahlwarneinrichtung kann auch noch weitere Elemente umfassen, beispielsweise einen Beschleunigungssensor und/oder einen akustischen Alarm.

Vorzugsweise weist das mobile Eingabe- und Auswertegerät eine Kartendarstellung auf, wobei insbesondere eine satellitengestützte Navigation umfasst ist. Damit bietet das mobile Eingabe- und Auswertegerät neben den für die Steuerung des Antriebssystems des Fahrzeuges erforderlichen Fähigkeiten auch alle Funktionen für eine automatische, satellitengestützte Navigation. Dies ist insbesondere bei den üblichen Smartphones problemlos möglich, da sowohl die Speicherkapazität als auch die Rechenkapazität ausreichend hoch ist und üblicherweise beispielsweise ein GPS-Modul und eine drahtlose Kommunikationstechnik bereits integriert sind. Dadurch wird die Anzahl erforderlicher Geräte zur Bereitstellung aller Funktionalitäten gering gehalten.

Bevorzugterweise umfassen die elektronischen Komponenten eine Komponente zur Motorsteuerung, eine elektronische Schaltungseinrichtung, ein Aktuator zur Beeinflussung einer Federrate bzw. von Fahrwerkseigenschaften, einen Aktuator zur Änderung einer Sattelhöhe und/oder eine Lichtsteuerung. Damit ist bei landgebundenen Fahrzeugen bereits eine weitgehende Beeinflussung der Fahreigenschaften möglich. Beispielsweise wird über zwei Servomotoren das Fahrwerk eingestellt, wobei eine Ansteuereung prinzipiell automatisch durch das Eingabe- und Auswertegerät erfolgen kann, das beispielsweise auf Grundlage von Kartendaten oder Messwerten weiß, ob es z.B. bergauf oder bergab geht oder welche Fahrbahnbeschaffenheit vorliegt. Bei Wasserfahrzeugen kann gegebenenfalls noch eine Möglichkeit der automatischen Steuerung, also ein Autopilot, hinzukommen. Dafür ist eine elektronische Komponente erforderlich, die die Fahrrichtung beeinflussen kann, beispielsweise ein Aktuator zur Verstellung eines Ruderwinkels. Das Steuerungssystem kann aber je nach Anforderung auch noch weitere, hier nicht aufgeführte elektronische Komponenten aufweisen.

Die Mittel umfassen vorzugsweise einen Drehzahlensensor, einen Geschwindigkeitssensor, ein Trittfrequenzsensor, einen Druckluftsensor, einen Sensor zur Erfassung einer Ladekapazität und/oder einen Sensor zur Erfassung einer Ausgangsleistung. Damit sind bereits vielfältige Zustandsinformationen abrufbar, sodass eine weitgehend automatische Steuerung möglich ist. Auch können dem Nutzer viele Informationen bereitgestellt werden. Je nach Anforderungen können auch noch weitere Mittel vorgesehen sein, beispielsweise ein Höhensensor oder ein Temperatursensor. Weitere Mittel können in Form von Treiberbausteinen zur Ansteuerung der elektrischen Komponenten dienen. Wenn die Mittel zunächst mit dem Sende- und Empfangselement kommunizieren und die Signale von dort erst zum mobilen Eingabe- und Auswertegerät weitergeleitet werden, stellt die Anbindung vieler Mittel für das Eingabe- und Auswertegerät keine besondere Belastung dar. Vielmehr erfolgt die Adressierung dieser Mittel und gegebenenfalls auch der elektronischen Komponenten, vorzugsweise nur im Sende- und Empfangselement, sodass die Implementierung im Eingabe- und Auswertegerät rein softwarebezogen vorgenommen werden kann. Der Implementierungsaufwand wird so gering gehalten und die Variabilität hinsichtlich des verwendbaren Eingabe- und Auswertegerätes hoch gehalten. Beispielsweise können dafür Smartphones mit jedem beliebigen Betriebssystem verwendet werden.

In einer bevorzugten Weiterbildung ist ein elektrischer Energiespeicher, insbesondere zur Energieversorgung des in der Haltevorrichtung gehaltenen mobilen Eingabe- und Auswertegerätes in der Haltevorrichtung angeordnet. Dabei kann der elektrische Energiespeicher auch zur Energieversorgung des Sende- und Empfangselementes dienen, sodass die Haltevorrichtung frei platziert werden kann, ohne über Leitungen mit irgendwelchen Komponenten des Fahrzeuges verbunden werden zu müssen. Die Haltevorrichtung kann dabei problemlos auch auf bewegten Elementen, wie beispielsweise einem Lenker, montiert werden. Somit ist es problemlos möglich, das mobile Eingabe- und Auswertegerät in der Haltevorrichtung im gut zugänglichen und sichtbaren Bereich unterzubringen. Der elektrische Energiespeicher kann darüber hinaus zur Energieversorgung des mobilen Eingabe- und Auswertegerätes verwendet werden. Damit wird dem häufig vorhandenen Nachteil begegnet, dass die Kapazitäten der in mobilen Eingabe- und Auswertegeräten, insbesondere in Smartphones, verwendeten Akkus, sehr begrenzt sind. Mithilfe des elektrischen Energiespeichers innerhalb der Haltevorrichtung können dennoch akzeptable Laufzeiten erreicht werden. Beispielsweise kann so der Betrieb über acht Stunden aufrechterhalten werden.

Vorzugsweise weist das mobile Eingabe- und Auswertegerät eine Funktion zur Restweitenberechnung auf. Dies ist insbesondere bei Fahrzeugen mit einem elektrischen Antrieb, wie Elektrofahrrädern, besonders hilfreich, da ein Nachladen des elektrischen Energiespeichers, der zur Versorgung des elektrischen Antriebs dient, nicht überall problemlos möglich ist und darüber hinaus relativ viel Zeit benötigt. Dabei können beispielsweise auch besondere Funktionen vorgesehen sein, um die Restreichweite zu verlängern, wie beispielsweise einer Begrenzung der maximal abrufbaren Leistung. Ferner kann vorgesehen sein, zur Restweitenberechnung auf hinterlegte Kartendaten, insbesondere eine Topografie der vorausliegenden Strecke, zurück zu greifen, umso eine sehr genaue Restweitenberechnung zu erzielen.

Vorteilhafterweise weist das Steuerungssystem ein Fernbedienungsmodul auf, das insbesondere drahtlos mit dem mobilen Eingabe- und Auswertegerät verbindbar ist. Über ein derartiges Fernbedienungsmodul kann dann das mobile Eingabe- und Auswertegerät bedient werden, ohne angefasst zu werden. Das Fernbedienungsmodul entspricht damit in etwa einer Multifunktionssteuerung, wie sie beispielsweise von entsprechenden Lenkrädern von Kraftfahrzeugen bekannt ist. Dabei ist es beispielsweise möglich, das Fernbedienungsmodul mit taktilen Tastern zu versehen, um auch mit Handschuhen eine Bedienung zu ermöglichen. Dies ist insbesondere bei der Verwendung eines Smartphones als Eingabe- und Auswertegerät vorteilhaft, das üblicherweise mit einem berührungssensitiven Display ausgestattet ist, welches eine Bedienung mit Handschuhen nicht erlaubt. Ferner kann das Fernbedienungsmodul so montiert werden, dass zu der Bedienung ein Lenker des Fahrzeuges, insbesondere des Elektrofahrrades, nicht losgelassen werden muss. Dies ist insbesondere dann möglich, wenn das Fernbedienungsmodul mit dem Daumen bedienbar ist und neben dem üblicherweise an einem Fahrradlenker vorhandenen Lenkergriffen montiert werden kann.

Bei einem Verfahren zur Steuerung eines Fahrzeuges, insbesondere eines Elektrofahrzeuges, mit einem Steuerungssystem nach einem der Ansprüche 1 bis 14, ist erfindungsgemäß vorgesehen, Zustandsinformationen über am Fahrzeug befestigte Mittel zu erfassen und an ein mobiles Eingabe- und Auswertegerät zu übertragen, wobei im mobilen Eingabe- und Auswertegerät die Zustandsinformationen ausgewertet und Steuersignale zur Steuerung von elektronischen Komponenten des Fahrzeuges generiert werden. Zur Auswertung der Zustandsinformationen sowie der Generierung der Steuersignale dient also keine fest mit dem Fahrzeug verbundene Steuereinheit, sondern ein mobiles Eingabe- und Auswertegerät, das darüber hinaus noch weitere Funktionalitäten aufweisen kann. Insbesondere kann das mobile Eingabe- und Auswertegerät dabei zur Steuerung unterschiedlicher Fahrzeuge eingesetzt werden, wobei es vom Benutzer mit dem jeweils verwendeten Fahrzeug gekoppelt wird. Es ist also nicht erforderlich, für jedes Fahrzeug ein eigenes, stationäres und vollständiges Steuerungssystem zu integrieren. Vielmehr wird eine dezentrale Lösung angestrebt. Der Herstellungsaufwand des Fahrzeuges wird somit gering gehalten und durch die Verwendung eines meist ohnehin vorhandenen mobilen Eingabe- und Auswertegerätes eine kostengünstige Lösung zum Steuern der elektronischen Komponenten des Fahrzeuges bereitgestellt.

Dabei ist besonders bevorzugt, dass als mobiles Eingabe- und Auswertegerät ein Smartphone verwendet wird. Ein Smartphone ist häufig ohnehin vorhanden und für den mobilen Einsatz gerade prädestiniert. Dabei weist es in der Regel eine ausreichende Rechenleistung und Speicherkapazität auf, um weitere Programme auszuführen, die für die Steuerung der elektronischen Komponenten des Fahrzeuges erforderlich sind. Durch die Verwendung des Smartphones mit der dadurch zur Verfügung gestellten Rechenleistung und der dadurch ebenfalls zur Verfügung gestellten Benutzerschnittstelle, wie einem berührungsempfindlichen Display, wird der Aufwand und damit die Kosten für das restliche Steuerungssystem gering gehalten.

Dabei ist besonders bevorzugt, dass vom mobilen Eingabe- und Auswertegerät Steuersignale für ein elektrisches Antriebssystem des Fahrzeuges generiert werden, wobei Zustandsinformationen vom elektrischen Antriebssystem an das mobile Eingabe- und Auswertegerät übermittelt werden. Das mobile Eingabe- und Auswertegerät wird also nicht nur zur Anzeige von Zustandsinformationen, die über verschiedene Sensoren erfasst werden, verwendet, sondern auch zur Generierung von Steuersignalen für das elektrische Antriebssystem des Fahrzeuges. Weitere Steuersignale können beispielsweise für Stellmotoren, Schalter, Kameras, Sensoren und Ähnlichem generiert werden. Ein zusätzlicher, fest mit dem Fahrzeug verbundener Controller, kann daher gegebenenfalls vollständig entfallen oder aber mit geringerer Leistungsfähigkeit ausgestattet sein, sodass dieser entsprechend kostengünstiger ist.

In einer bevorzugten Ausgestaltung werden die Signale vom mobilen Eingabe- und Auswertegerät drahtlos an ein Sende- und Empfangselement übertragen, das in einer Haltevorrichtung für das mobile Eingabe- und Auswertegerät angeordnet ist, wobei die Signale vom Sende- und Empfangselement insbesondere drahtlos an die Mittel weitergeleitet werden. Durch die Verwendung standardisierter Protokolle für die drahtlose Übertragung können eine Vielzahl von mobilen Eingabe- und Auswertegeräten herstellerunabhängig mit dem Sende- und Empfangselement kommunizieren, ohne dass eine entsprechende drahtgebundene Schnittstelle geschaffen werden muss, die in der Regel gerätespezifisch sein müsste. Dadurch wird eine hohe Variabilität erhalten. Das Sende- und Empfangselement wandelt die vom Eingabe- und Auswertegerät generierten Signale dann in entsprechende, von den Mitteln verwendbare Signale um. Dasselbe gilt sinngemäß für die von den Mitteln empfangenen Informationen, die in entsprechende Signale für das Eingabe- und Auswertegerät umgesetzt werden. Die Adressierung der Mittel erfolgt dementsprechend im Sende- und Empfangselement, sodass die Implementation des mobilen Eingabe- und Auswertegerätes einfach gehalten ist. Eine drahtlose Übertragung der Signale zwischen Sende- und Empfangselement ermöglicht ein einfaches Entfernen oder Hinzufügen weiterer Mittel und Funktionalitäten. Ferner kann auf das aufwendige Verlegen von Leitungen verzichtet werden und das Sende- und Empfangselement, beziehungsweise die Haltevorrichtung für das Eingabe- und Auswertegerät, entsprechend frei positioniert werden.

Bevorzugterweise wird zumindest für den größten Teil der für die Steuerung des Fahrzeuges, insbesondere des elektrischen Antriebssystems, erforderlichen Rechenleistung die im Eingabe- und Auswertegerät verfügbare Rechenleistung genutzt. Eine entsprechende Rechenleistung steht insbesondere bei den üblichen Smartphones ohnehin zur Verfügung. Damit kann das übrige Steuerungssystem sehr einfach und kostengünstig aufgebaut werden.

Vorzugsweise wird zur Realisierung der Funktionen im mobilen Eingabe- und Auswertegerät Opensource-Software verwendet. Damit können die Funktionalitäten des Steuerungssystems relativ einfach erweitert und an sich ändernde Bedürfnisse angepasst werden. Darüber hinaus werden die Kosten für das Steuerungssystem dadurch gering gehalten.

Vorteilhafterweise werden im Eingabe- und Auswertegerät auf Basis der von den Mitteln erhaltenen Zustandsinformationen automatisch Steuersignale generiert, die insbesondere eine Federrate, eine Ansprechcharakteristik des elektrischen Antriebssystems und/oder eine Leistungsabgabe des elektrischen Antriebs steuern. Das mobile Eingabe- und Auswertegerät kann also auf die Fahreigenschaften des Fahrzeuges relativ stark Einfluss nehmen. Durch eine automatische Generierung der Steuersignale wird dabei ein hoher Komfort erreicht. Die Steuerung kann dabei so weit gehen, dass die generierten Daten für unterschiedliche Assistenzzwecke oder auch zur Gamifikation, also beispielsweise zum Datenaustausch zwischen "befreundeten" Systemen, verwendet werden können.

Die Erfindung wird im Folgenden anhand bevorzugter Ausführungsbeispiele in Verbindung mit den Zeichnungen näher beschrieben. Hierin zeigen:
- Fig. 1: einen schematischen Aufbau einer ersten Ausführungsform des Steuerungssystems,
- Fig. 2: einen schematischen Aufbau einer zweiten Ausführungsform des Steuerungssystems und
- Fig. 3: einen schematischen Aufbau einer dritten Ausführungsform des Steuerungssystems.

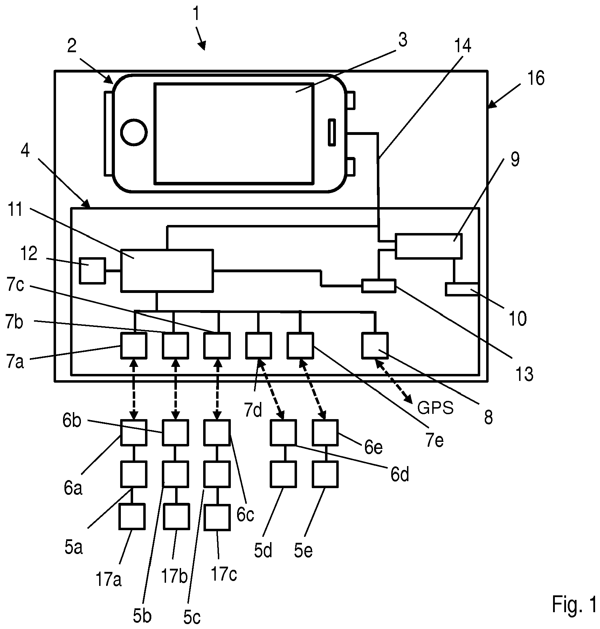

In Figur 1 ist schematisch ein erfindungsgemäßes Steuerungssystem 1 für ein Land- oder Wasserfahrzeug, insbesondere für ein elektrisch angetriebenes Fahrzeug, wie ein Elektrofahrrad dargestellt. Das Steuerungssystem 1 umfasst als wesentliche Komponente ein mobiles Eingabe- und Auswertegerät 2, dass die für den Betrieb des Steuerungssystems 1 erforderliche Rechenleistung und zusätzlich eine Bedienerschnittstelle zur Verfügung stellt. Das Eingabe- und Auswertegerät 2 ist als Smartphone ausgebildet, beispielsweise als IPhone oder Samsung Galaxy und weist dementsprechend ein berührungssensitives Display zur Anzeige von Informationen sowie als Nutzerschnittstelle auf, über das Eingaben vom Benutzer vorgenommen werden können. Ein Sende- und Empfangselement 4 dient zur Übertragung von Signalinformationen zwischen dem Eingabe- und Auswertegerät 2 und Mitteln 5a bis 5e, die Kommunikationsmitteln 6a bis 6e umfassen, um drahtlos mit dem Sende- und Empfangselement 4 kommunizieren zu können. Mit Hilfe der Mittel 5a-5c können elektronische Komponenten 17-17c wie beispielsweise Schalter, ein elektrisches Antriebssystem, Stellmotoren, eine Kamera und Ähnliches angesteuert werden. Die Mittel 5a-5c mit den dazugehörigen Kommunikationsmitteln 6a-6c ermöglichen dann die Kommunikation über einen drahtlosen Standard, beispielsweise Zigbee, Bluetooth, WLAN oder Ähnliches. Das Sende- und Empfangselement 4 weist dementsprechende Kommunikationselemente 7a bis 7e auf.

Auch wenn im hier gezeigten, schematischen Aufbau die Anzahl der Kommunikationselemente 7a bis 7e mit der Anzahl der Mittel 5a bis 5e übereinstimmt, ist dies an sich nicht erforderlich. Vielmehr kann ein einziges Kommunikationselement mit mehreren Mitteln verbunden sein. Die hohe Anzahl an Kommunikationselementen 7a bis 7e dient nur der Veranschaulichung verschiedener, anwendbarer Funkstandards, die nicht alle im Sende- und Empfangselement 4 integriert sein müssen.

Das Sende- und Empfangselement 4 ist in einer Haltevorrichtung 16 untergebracht, die eine formschlüssige Aufnahme des mobilen Eingabe- und Auswertegerätes aufweist. Bei Betrieb des Fahrzeuges kann das mobile Eingabe- und Auswertegerät dementsprechend sicher in der Haltevorrichtung gehalten werden.

Ferner umfasst das Sende- und Empfangselement 4 ein Mittel 8 zur satellitengestützten Positionsbestimmung, insbesondere eines GPS-/GSM-Modul. Ferner ist ein elektrischer Energiespeicher 9, der beispielsweise als Batterie ausgebildet ist, eine Kamera 10, ein Controller 11 sowie eine Steuerungskomponente 12 vorgesehen. Gegebenenfalls kann über einen Schalter 13 eine Energieversorgung zwischen dem elektrischen Energiespeicher 9 und dem Controller 11 ein- und ausgeschaltet werden. Dementsprechend kann das Steuerungssystem 1 in Betrieb genommen werden beziehungsweise bei Nichtgebrauch ausgestellt werden.

Zwischen dem Sende- und Empfangselement 4 und dem mobilen Eingabe- und Auswertegerät 2 ist bei diesem Ausführungsbeispiel eine drahtgebundene Kommunikation vorgesehen. Dafür ist eine Leitung 14 mit entsprechenden Anschlusssteckern in eine Anschlussbuchse des Eingabe- und Auswertegerätes 2 eingeführt. Über die Leitung 14 erfolgt dann zum einen eine elektrische Energieversorgung aus dem elektrischen Energiespeicher 9 und ferner eine Übertragung von Steuersignalen und Zustandsinformationen zwischen dem Eingabe- und Auswertegerät 2 und dem Sende- und Empfangselement 4 beziehungsweise dem Controller 11. Der Controller 11 setzt dann die empfangenen Steuersignale in entsprechende Signale für die Mittel 5a bis 5c um, die dann als Treiberstufe dienen. Im Gegenzug wandelt er die von den Mitteln 5d und 5e empfangenen Signale in entsprechende, vom Eingabe- und Auswertegerät 2 verwertbare Daten um. Das Sende- und Empfangselement 4, das in der Haltervorrichtung für das mobile Eingabe- und Auswertegerät 2 integriert ist, stellt also eine Zentraleinheit dar, die zur Kommunikation zwischen dem mobilen Eingabe- und Auswertegerät 2 und den Mitteln 5a bis 5e beziehungsweise den Komponenten 17a bis 17c des Fahrzeuges dient. Dabei wird für die wesentlichen Steuerungsaufgaben, insbesondere die Generierung der Steuersignale die Rechenleistung des mobilen Eingabe- und Auswertegerätes 2 verwendet.

Bei dem in Figur 1 dargestellten Ausführungsbeispiel erfolgt die Kommunikation zwischen dem mobilen Eingabe- und Auswertegerät 2 sowie dem Sende- und Empfangselement 4 drahtgebunden, was durch eine durchgezogene Leitung dargestellt ist. Die Kommunikation zwischen dem Sende- und Empfangselement 4 und den Mitteln 6a bis 6e erfolgt hingegen drahtlos über entsprechende Standards, beispielsweise Bluetooth, WLAN oder Ähnlichem. Es ist daher problemlos möglich, das Steuerungssystem 1 um weitere Komponenten zu erweitern oder einzelne Komponenten zu entfernen. Auch ist eine räumliche Trennung zwischen dem Sende- und Empfangselement sowie den einzelnen Komponenten 5a bis 5e problemlos durch die drahtlose Kommunikation überbrückbar. Ein Implementierungs- und Nachrüstungsaufwand wird so gering gehalten.

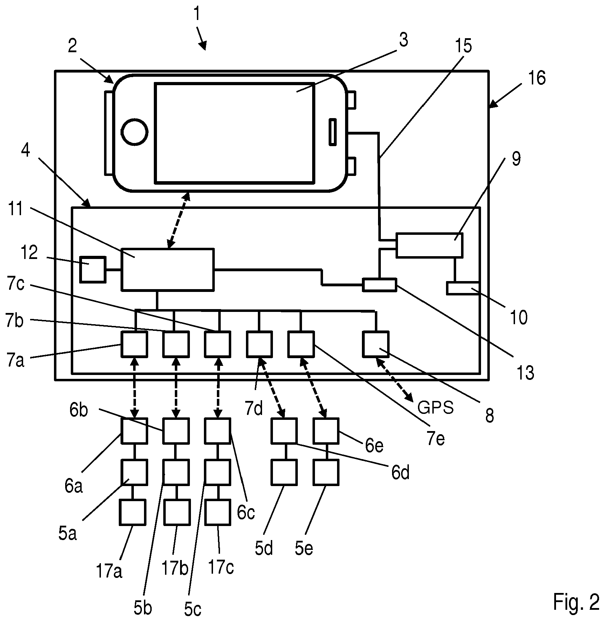

Figur 2 zeigt nun schematisch den Aufbau eines weiteren Ausführungsbeispiels des erfindungsgemäßen Steuerungssystems 1, der sich im Wesentlichen dadurch von dem in Figur 1 dargestellten Aufbau unterscheidet, dass das mobile Eingabe- und Auswertegerät 2 drahtlos mit dem Sende- und Empfangselement 4 kommuniziert. Zusätzlich ist eine drahtgebundene Energieversorgung über eine Versorgungsleitung 15 vorgesehen. Die drahtlose Kommunikation zwischen dem Sende- und Empfangselement 4 sowie dem Eingabe- und Auswertegerät 2 erfolgt dann vorzugsweise ebenfalls über übliche Industriestandards, beispielsweise WLAN oder Bluetooth. Dadurch ist eine Kommunikation bzw. Steuerung bereits dann möglich, wenn das mobile Eingabe- und Auswertegerät 2 noch nicht in der Haltevorrichtung 16 aufgenommen ist. Darüber hinaus ist eine herstellerunabhängige Verwendung von Eingabe- und Auswertegeräten 2 möglich, da diese nur eine standardisierte, drahtlose Übertragung anbieten müssen, wobei jedoch auf spezielle Anschlussstecker beziehungsweise Anschlussbuchsen keine Rücksicht genommen werden muss.

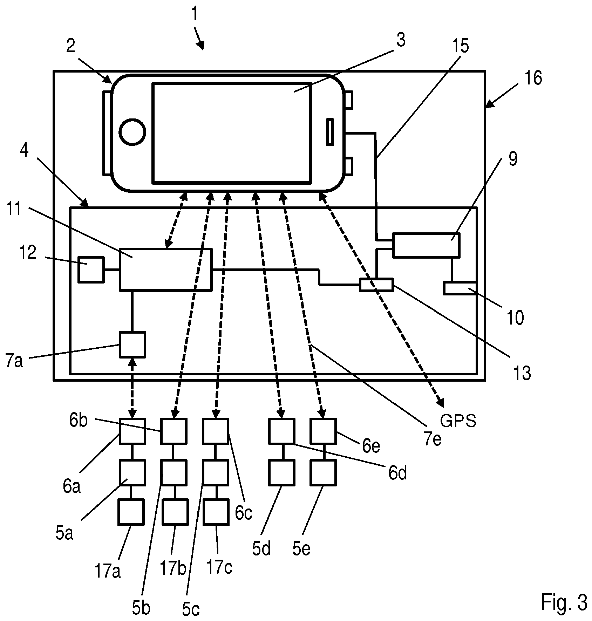

In Figur 3 ist ein weiter vereinfachter Aufbau eines Steuerungssystems 1 dargestellt, bei dem das mobile Eingabe- und Auswertegerät 2 teilweise direkt und drahtlos mit den Mitteln 5b bis 5d und den entsprechenden Komponenten 17b und 17c kommuniziert. Zusätzlich erfolgt eine drahtlose Kommunikation zwischen dem Eingabe- und Auswertegerät 2 und dem Sende- und Empfangselement 4 und von dort wiederum mit dem Mittel 6a und der Komponente 5a. Das Sende- und Empfangselement 4 weist darüber hinaus kein Mittel zur satellitengestützten Positionsbestimmung auf. Vielmehr wird das im Eingabe- und Auswertegeräten 2 vorhandene GPS-Modul zu Positionsbestimmung verwendet. Insbesondere bei üblichen Smartphones ist dieses ohnehin vorhanden.

Die Erfindung ist nicht auf eines der vorbeschriebenen Ausführungsbeispiele beschränkt. Vielmehr ist sie in vielfältiger Weise abwandelbar. So können unterschiedliche Standards zur drahtlosen Kommunikation vorgesehen sein. Es ist auch denkbar, das Sende- und Empfangselement 4 drahtgebunden mit den Mitteln 6a bis 6e beziehungsweise den Komponenten 17a bis 17c zu verbinden. Auch ist die Anzahl der Mittel und Komponenten in Abhängigkeit von den jeweiligen Anforderungen relativ frei wählbar.

Das erfindungsgemäße Steuerungssystem für ein Fahrzeug, insbesondere für ein Fahrzeug mit einem elektrischen Antriebssystem, wie ein Elektrofahrrad, bietet eine preiswerte, mit geringem Aufwand realisierbare Lösung. Dabei werden meist ohnehin vorhandene mobile Eingabe- und Auswertegeräte, wie Smartphones oder Tablet-PCs, als wesentliche Komponente genutzt, die vor allem die für die Steuerung erforderliche Rechenleistung bereitstellen. Der fest mit dem jeweils verwendeten Fahrzeug zu verbindende Teil des Steuerungssystems, also insbesondere das Sende- und Empfangselement sowie die Mittel und elektronischen Komponenten sind teilweise ohnehin vorhanden, teilweise aber auch ohne großen Aufwand zu installieren. Dabei erfolgt über das mobile Eingabe- und Auswertegerät, insbesondere einem Smartphone, eine preiswerte Vernetzungslösung aller elektronischen Komponenten mit neuartigen Anzeige- und Bedienkonzepten. Insbesondere können Zustandsinformationen sowohl vom Fahrer als auch vom Fahrzeug und der Umwelt vom mobilen Eingabe- und Auswertegerät erfasst und ausgewertet werden.

Das mobile Eingabe- und Auswertegerät integriert dabei viele Funktionen in sich, beispielsweise bei einem Elektrofahrrad die Funktionen eines Fahrradcomputers, eines Telefons, eines Musikspielers, eine Lichtsteuerung, eine Betätigung für eine Gangschaltung, eine Einstellung einer Federcharakteristik, eine Einstellung einer Sattelhöhe und Weiteres. Durch zusätzliche Software ergibt sich dabei eine einfache Erweiterbarkeit.

Das erfindungsgemäße Steuerungssystem stellt also eine drahtlose, vernetzte Steuerung von Fahrzeugsystemen auf Basis von mobilen Eingabe- und Auswertegeräten, wie Smartphones, dar. Dabei kann das Steuerungssystem durch die Verlagerung des teuersten Elementes eines derartigen Steuerungssystems, nämlich des die Rechenleistung bereitstellenden Computers, in ein ohnehin vorhandenes Gerät, wie ein Smartphone, eine sehr kostengünstige, wenig aufwendige Herstellung erreichen. Dabei werden sowohl Fahrzeug- als auch Fahrerdaten über entsprechende Mittel, wie Sensoren, erfasst und zur automatischen und intelligenten Steuerung mittels Software im mobilen Eingabe- und Auswertegerät ausgewertet. Zusätzlich kann ein satellitengestützter Diebstahlschutz vorgesehen werden sowie eine zusätzliche Energieversorgung, um die Laufdauer des mobilen Eingabe- und Auswertegerätes zu vergrößern. Darüber hinaus kann über das mobile Eingabe- und Auswertegerät optional auch eine Steuerung des elektrischen Antriebssystems erfolgen. Die fest mit dem jeweiligen Fahrzeug zu installierenden Elemente der Steuerung können also relativ kostengünstig gefertigt werden. Insbesondere kann es dabei möglich sein, einzelne Komponenten, wie Motoren, Sensoren, Schalter, Kameras und Antriebe zu steuern.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Steuerungssystem
- 2: Eingabe- und Auswertegerät
- 3: Display
- 4: Sende- und Empfangselement
- 5a-5e: Mittel
- 6a-6e: Kommunikationsmittel
- 7a-7e: Kommunikationselemente
- 8: Mittel zur satellitengestützten Kommunikation
- 9: elektrischer Energiespeicher
- 10: Kamera
- 11: Controller
- 12: Steuerungskomponente
- 13: Schalter
- 14: Leitung
- 15: Versorgungsleitung
- 16: Haltevorrichtung
- 17a-17c: elektronische Komponenten

## Patentansprüche

1. Steuerungssystem (1) für ein Elektrofahrrad, das ein mobiles Eingabe- und Auswertegerät (2), eine Haltevorrichtung (16) für das Eingabe- und Auswertegerät (2) sowie Mittel (5a-5e) zum Ansteuern elektronischer Komponenten (17a-17c) und zum Erfassen von Zustandsinformationen des Fahrzeugs umfasst, wobei eine Auswertung der von den Mitteln (5a-5e) erhaltenen Zustandsinformationen sowie die Generierung von Steuersignalen für die elektronischen Komponenten (17a-17c) im mobilen Eingabe- und Auswertegerät (2) erfolgt, wobei in der Haltevorrichtung mindestens ein Sende- und Empfangselement (4) zum Weiterleiten von Signalen zu den Mitteln (5a-5e) angeordnet ist, mit dem das mobile Eingabe- und Auswertegerät (2) drahtlos verbindbar ist, **dadurch gekennzeichnet, dass** die Haltevorrichtung (16) als Zentraleinheit mit einem eigenen Controller (11) ausgebildet ist, der eine Kommunikation zwischen dem mobilen Eingabe- und Ausgabegerät (2) und den Mitteln (5a-5e) steuert, und dass in der Haltevorrichtung ein elektrischer Energiespeicher (9) zur Energieversorgung des in der Haltevorrichtung gehaltenen mobilen Eingabe- und Auswertegeräts (2) angeordnet ist.

2. Steuerungssystem nach Anspruch 1, **dadurch gekennzeichnet, dass** es für ein Elektrofahrrad ausgebildet ist, das ein elektrisches Antriebssystem umfasst,
wobei Zustandsinformationen vom elektrischen Antriebssystem zum mobilen Eingabe-und Auswertegerät (2) und Steuersignale vom mobilen Eingabe- und Auswertegerät (2) an das Antriebssystem übertragbar sind.

3. Steuerungssystem nach Anspruch 1 oder 2, **dadurch gekennzeichnet, dass** das Sende- und Empfangselement (4) drahtlos mit den Mitteln (5a-5e) verbindbar ist, wobei das Sende- und Empfangselement (4) zur drahtlose Kommunikation insbesondere mit standardisierten Verfahren geeignet ist.

4. Steuerungssystem nach einem der vorhergehenden Ansprüche, **dadurch gekennzeichnet, dass** es Mittel zum Erfassen und insbesondere drahtlose Übertragen biometrischer Daten des Fahrers an das mobile Eingabe- und Auswertegerät (2) aufweist, das eine Funktion zur Darstellung und Auswertung der biometrischen Daten aufweist, wobei gegebenenfalls auf Grundlage der Auswertung automatisch Steuersignale vom mobilen Eingabe- und Auswertegerät (2) generierbar sind.

5. Steuerungssystem nach einem der vorhergehenden Ansprüche, **dadurch gekennzeichnet, dass** es Mittel (8) zur satellitengestützten Positionsbestimmung aufweist, die insbesondere in der Haltevorrichtung angeordnet sind.

6. Steuerungssystem nach einem der vorhergehenden Ansprüche, **dadurch gekennzeichnet, dass** in der Haltevorrichtung (16) eine Diebstahlwarneinrichtung angeordnet ist, die insbesondere ein Positionstracking aufweist.

7. Steuerungssystem nach einem der vorhergehenden Ansprüche, **dadurch gekennzeichnet, dass** die elektronischen Komponenten (17a-17c) insbesondere umfassen: eine Komponente zur Motorsteuerung, eine elektronische Schaltungseinrichtung, einen Aktuator zur Beeinflussung einer Federrate, einen Aktuator zur Änderung einer Sattelhöhe und/oder eine Lichtsteuerung.

8. Steuerungssystem nach einem der vorhergehenden Ansprüche, **dadurch gekennzeichnet, dass** die Mittel (5a-5e) umfassen: einen Drehzahlsensor, einen Geschwindigkeitssensor, einen Trittfrequenzsensor, einen Druckluftsensor, einen Sensor zur Erfassung einer Ladekapazität und/oder einen Sensor zur Erfassung einer Ausgangsleistung.

9. Steuerungssystem nach einem der vorhergehenden Ansprüche, **dadurch gekennzeichnet, dass** es ein Fernbedienungsmodul aufweist, das insbesondere drahtlos mit dem mobilen Eingabe- und Auswertegerät (2) verbindbar ist.

10. Verfahren zur Steuerung eines Elektrofahrrads mit einem Steuerungssystem (1) nach einem der vorhergehenden Ansprüche, wobei Zustandsinformationen über am Fahrzeug befestigte Mittel (5a-5e) erfasst und an ein mobiles Eingabe- und Auswertegerät (2) übertragen werden, wobei im mobilen Eingabe- und Auswertegerät (2) die Zustandsinformationen ausgewertet und Steuersignale zur Steuerung von elektronischen Komponenten (17a-17c) des Fahrzeugs generiert werden,
wobei Signale zwischen dem mobilen Eingabe- und Auswertegerät (2) und einem Sende- und Empfangselement (4) drahtlos übertragen werden, das in einer Haltevorrichtung für das mobile Eingabe- und Auswertegerät (2) angeordnet ist, wobei die Signale zwischen Sende- und Empfangselement (4) und den Mitteln (5a-5e) weitergeleitet werden, **dadurch gekennzeichnet, dass** die Haltevorrichtung (16) als Zentraleinheit mit einem eigenen Controller (11) dient, der eine Kommunikation zwischen dem mobilen Eingabe- und Ausgabegerät (2) und den Mitteln (5a-5e) steuert, und dass
das in der Haltevorrichtung gehaltenen mobilen Eingabe- und Auswertegeräts (2) von einem in der Haltevorrichtung angeordneten elektrischen Energiespeicher (9) mit Energie versorgt wird.

11. Verfahren nach Anspruch 10, **dadurch gekennzeichnet, dass** vom mobilen Eingabe- und Auswertegerät (2) Steuersignale für ein elektrisches Antriebssystem des Elektrofahrrads generiert werden, wobei Zustandsinformationen vom elektrischen Antriebssystem an das mobile Eingabe- und Auswertegerät (2) übermittelt werden.

12. Verfahren nach einem der Ansprüche 10 bis 11, **dadurch gekennzeichnet, dass** die Signale zwischen Sende- und Empfangselement (2) und den Mitteln (5a-5e) drahtlos weitergeleitet werden.

13. Verfahren nach einem der Ansprüche 10 bis 12, **dadurch gekennzeichnet, dass** zumindest für den größten Teil der für die Steuerung des Elektrofahrrads, insbesondere des elektrischen Antriebssystems, erforderlichen Rechenleistung die im Eingabe-und Auswertegerät (2) verfügbare Rechenleistung genutzt wird.

14. Verfahren nach einem der Ansprüche 10 bis 13, **dadurch gekennzeichnet, dass** im mobilen Eingabe- und Auswertegerät (2) auf Basis der von den Mitteln (5a-5e) erhaltenen Zustandsinformationen automatisch Steuersignale generiert werden;
die insbesondere eine Federrate, eine Ansprechcharakteristik des elektrischen Antriebssystems und/oder eine Leistungsabgabe des elektrischen Antriebs steuern.

## Claims

1. Control system (1) for an electric bicycle, which comprises a mobile input and evaluation device (2), a holding apparatus (16) for the input and evaluation device (2) and also means (5a-5e) for actuating electronic components (17a-17c) and for detecting state information of the vehicle, wherein the state information obtained by the means (5a-5e) is evaluated and control signals for the electronic components (17a-17c) in the mobile input and evaluation device (2) are generated, wherein at least one transmission and reception element (4) for transferring signals to the means (5a-5e) is arranged in the holding apparatus, the mobile input and evaluation device (2) being able to be connected wirelessly to said transmission and reception element,
**characterized in that**
the holding apparatus (16) is designed as a central unit having a separate controller (11), which controls communication between the mobile input and output device (2) and the means (5a-5e),
and **in that**
an electrical energy store (9) for supplying energy to the mobile input and evaluation device (2) held in the holding apparatus is arranged in the holding apparatus.

2. Control system according to Claim 1, **characterized in that** said control system is designed for an electric bicycle, which comprises an electric drive system, wherein state information is able to be transmitted from the electric drive system to the mobile input and evaluation device (2) and control signals are able to be transmitted from the mobile input and evaluation device (2) to the drive system.

3. Control system according to Claim 1 or 2, **characterized in that** the transmission and reception element (4) is able to be connected wirelessly to the means (5a-5e), wherein the transmission and reception element (4) is suitable for wireless communication, in particular using standardized methods.

4. Control system according to one of the preceding claims, **characterized in that** said control system has means for detecting and in particular wirelessly transmitting biometric data of the driver to the mobile input and evaluation device (2), which has a function for representing and evaluating the biometric data, wherein control signals are able to be generated automatically by the mobile input and evaluation device (2) where necessary based on the evaluation.

5. Control system according to one of the preceding claims, **characterized in that** said control system has means (8) for satellite-supported position determination, which are arranged in particular in the holding apparatus.

6. Control system according to one of the preceding claims, **characterized in that** a theft warning device is arranged in the holding apparatus (16), said theft warning device having in particular position tracking.

7. Control system according to one of the preceding claims, **characterized in that** the electronic components (17a-17c) comprise in particular: a component for motor control, an electronic circuit device, an actuator for influencing a spring rate, an actuator for changing a saddle height and/or a light controller.

8. Control system according to one of the preceding claims, **characterized in that** the means (5a-5e) comprise: a rotational speed sensor, a speed sensor, a cadence sensor, a pressurized air sensor, a sensor for detecting a charging capacity and/or a sensor for detecting an output power.

9. Control system according to one of the preceding claims, **characterized in that** said control system has a remote control module, which is able to be connected in particular wirelessly to the mobile input and evaluation device (2).

10. Method for controlling an electric bicycle with a control system (1) according to one of the preceding claims, wherein state information is detected by means of means (5a-5e) fastened to the vehicle and is transmitted to a mobile input and evaluation device (2), wherein the state information is evaluated and control signals for controlling electronic components (17a-17c) of the vehicle are generated in the mobile input and evaluation device (2),
wherein signals are transmitted wirelessly between the mobile input and evaluation device (2) and a transmission and reception element (4), which is arranged in a holding apparatus for the mobile input and evaluation device (2), wherein the signals are transferred between the transmission and reception element (4) and the means (5a-5e),
**characterized in that**
the holding apparatus (16) serves as a central unit having a separate controller (11), which controls communication between the mobile input and output device (2) and the means (5a-5e),
and **in that**
the mobile input and evaluation device (2) held in the holding apparatus is supplied with energy by an electrical energy store (9) arranged in the holding apparatus.

11. Method according to Claim 10, **characterized in that** control signals for an electric drive system of the electric bicycle are generated by the mobile input and evaluation device (2), wherein state information is transmitted from the electric drive system to the mobile input and evaluation device (2).

12. Method according to one of Claims 10 to 11, **characterized in that** the signals are transferred wirelessly between the transmission and reception element (2) and the means (5a-5e).

13. Method according to one of Claims 10 to 12, **characterized in that**, at least for the greatest part of the computational power required for controlling the electric bicycle, in particular the electric drive system, the computational power available in the input and evaluation device (2) is used.

14. Method according to one of Claims 10 to 13, **characterized in that** control signals are generated automatically in the mobile input and evaluation device (2) on the basis of the state information obtained by the means (5a-5e), said control signals controlling in particular a spring rate, a response characteristic of the electric drive system and/or a power output of the electric drive.

## Revendications

1. Système de commande (1) pour une bicyclette électrique, comportant un appareil de saisie et d'interprétation (2) mobile, un arrangement de maintien (16) pour l'appareil de saisie et d'interprétation (2) ainsi que des moyens (5a-5e) destinés à commander des composants électroniques (17a-17c) et à acquérir des informations d'état du véhicule, une interprétation des informations d'état obtenues par les moyens (5a-5e) ainsi que la génération de signaux de commande pour les composants électroniques (17a-17c) s'effectuant dans l'appareil de saisie et d'interprétation (2) mobile, au moins un élément d'émission et de réception (4) destiné à transférer des signaux aux moyens (5a-5e) étant disposé dans l'arrangement de maintien, avec lequel l'appareil de saisie et d'interprétation (2) mobile peut être connecté sans fil,
**caractérisé en ce que**
l'arrangement de maintien (16) est réalisé sous la forme d'une unité centrale comprenant son propre contrôleur (11), qui commande une communication entre l'appareil d'entrée et de sortie (2) mobile et les moyens (5a-5e), et **en ce qu'**un accumulateur d'énergie électrique (9) destiné à l'alimentation en énergie de l'appareil de saisie et d'interprétation (2) mobile maintenu dans l'arrangement de maintien est disposé dans l'arrangement de maintien.

2. Système de commande selon la revendication 1, **caractérisé en ce qu'**il est configuré pour une bicyclette électrique qui comporte un système de propulsion électrique, des informations d'état pouvant être transmises du système de propulsion électrique à l'appareil de saisie et d'interprétation (2) mobile et des signaux de commande de l'appareil de saisie et d'interprétation (2) mobile au système de propulsion.

3. Système de commande selon la revendication 1 ou 2, **caractérisé en ce que** l'élément d'émission et de réception (4) peut être connecté sans fil aux moyens (5a-5e), l'élément d'émission et de réception (4) étant adapté pour une communication sans fil, notamment avec des procédés normalisés.

4. Système de commande selon l'une des revendications précédentes, **caractérisé en ce qu'**il possède des moyens pour acquérir et notamment transmettre sans fil des données biométriques du conducteur à l'appareil de saisie et d'interprétation (2) mobile, lequel possède une fonction de représentation et d'interprétation des données biométriques, des signaux de commande pouvant éventuellement être générés automatiquement par l'appareil de saisie et d'interprétation (2) mobile sur la base de l'interprétation.

5. Système de commande selon l'une des revendications précédentes, **caractérisé en ce qu'**il possède des moyens (8) de détermination de position assistée par satellite, lesquels sont notamment disposés dans l'arrangement de maintien.

6. Système de commande selon l'une des revendications précédentes, **caractérisé en ce qu'**un dispositif d'alerte antivol est disposé dans l'arrangement de maintien (16), lequel possède notamment un suivi de position.

7. Système de commande selon l'une des revendications précédentes, **caractérisé en ce que** les composants électroniques (17a-17c) comportent notamment : un composant destiné à la commande du moteur, un dispositif de commutation électronique, un actionneur destiné à influencer un facteur de rappel, un actionneur destiné à modifier une hauteur de selle et/ou une commande de lampe.

8. Système de commande selon l'une des revendications précédentes, **caractérisé en ce que** les moyens (5a-5e) comportent : un capteur de vitesse de rotation, un capteur de vitesse, un capteur de fréquence de pédalage, un capteur de pression atmosphérique, un capteur destiné à détecter une capacité de charge et/ou un capteur destiné à détecter une puissance de sortie.

9. Système de commande selon l'une des revendications précédentes, **caractérisé en ce qu'**il possède un module de commande à distance qui peut notamment être connecté sans fil à l'appareil de saisie et d'interprétation (2) mobile.

10. Procédé de commande d'une bicyclette électrique avec un système de commande (1) selon l'une des revendications précédentes, des informations d'état étant acquises par le biais de moyens (5a-5e) fixés au véhicule et transmises à un appareil de saisie et d'interprétation (2) mobile, les informations d'état étant interprétées et des signaux de commande destinés à commander des composants électroniques (17a-17c) du véhicule étant générés dans l'appareil de saisie et d'interprétation (2) mobile,
les signaux étant transmis sans fil entre l'appareil de saisie et d'interprétation (2) mobile et un élément d'émission et de réception (4) qui est disposé dans un arrangement de maintien (16) pour l'appareil de saisie et d'interprétation (2) mobile, les signaux étant transférés entre l'élément d'émission et de réception (4) et les moyens (5a-5e),
**caractérisé en ce que**
l'arrangement de maintien (16) sert d'unité centrale avec son propre contrôleur (11), qui commande une communication entre l'appareil d'entrée et de sortie (2) mobile et les moyens (5a-5e),
et **en ce que** l'appareil de saisie et d'interprétation (2) mobile maintenu dans l'arrangement de maintien est alimenté en énergie par un accumulateur d'énergie électrique (9) disposé dans l'arrangement de maintien.

11. Procédé selon la revendication 10, **caractérisé en ce que** des signaux de commande pour un système de propulsion électrique de la bicyclette électrique sont générés par l'appareil de saisie et d'interprétation (2) mobile, des informations d'état étant communiquées par le système de propulsion électrique à l'appareil de saisie et d'interprétation (2) mobile.

12. Procédé selon l'une des revendications 10 à 11, **caractérisé en ce que** les signaux entre l'élément d'émission et de réception (2) et les moyens (5a-5e) sont transférés sans fil.

13. Procédé selon l'une des revendications 10 à 12, **caractérisé en ce que** la puissance de calcul disponible dans l'appareil de saisie et d'interprétation (2) est utilisée au moins pour la majeure partie de la puissance de calcul nécessaire pour la commande de la bicyclette électrique, notamment du système de propulsion électrique.

14. Procédé selon l'une des revendications 10 à 13, **caractérisé en ce que** des signaux de commande sont générés automatiquement dans l'appareil de saisie et d'interprétation (2) mobile sur la base des informations d'état obtenues par les moyens (5a-5e), lesquels commandent notamment un facteur de rappel, une caractéristique de réaction du système de propulsion électrique et/ou une puissance utile de la propulsion électrique.
